# EUROPEAN PATENT APPLICATION

(11) **EP 2 456 222 A2**
(43) Date of publication of application: **23.05.2012**
(21) Application number: 11184916.2
(22) Date of filing: 12.10.2011
(51) Int. Cl.: H04N 13/04

(54) **Stereoscopic Display Device**

(30) Priority: 17.11.2010 JP 2010257042
(71) Applicant: Sony Corporation, Tokyo 108-0075 (JP)
(72) Inventor: Ohyama, Tsuyoshi, Minato-ku, Tokyo 108-0075 (JP); Hamagishi, Goro, Aichi-Ken, 470-2102 (JP)
(74) Representative: Ealey, Douglas Ralph

(57) **Abstract**

A display device includes: a two-dimensional display unit that displays p viewpoint videos, which are spatially divided, within one screen; and an optical device that optically splits the p viewpoint videos displayed on the display unit so as to enable a stereoscopic view at p viewpoints. The display unit includes unit pixels each formed from sub-pixels that display r types of colors necessary for a color video display, and the sub-pixels that emit light of different colors are arranged so as to be adjacent to each other in a same row in a screen horizontal direction. Each of the p viewpoint videos is displayed in n sub-pixel rows, each of which is configured by the sub-pixels aligned in a first direction other than the screen horizontal direction and which are consecutive in the screen horizontal direction, in the screen horizontal direction on a cycle of (p x n) rows.

## Description

The present disclosure relates to a stereoscopic display device.

Recently, display devices (stereoscopic display devices) that can realize a stereoscopic view have attracted attention. In the display of a stereoscopic view, a left-eye video and a right-eye video in parallax to each other (different viewpoints) are displayed. Thus, when an observer sees the left-eye video and the right-eye video with his or her left and right eyes, a stereoscopic video having a depth can be recognized. In addition, display devices are developed which can provide an observer with a more natural stereoscopic video by displaying three or more videos in parallax to each other.

Such stereoscopic display devices can be largely divided into a type for which it is necessary to use dedicated glasses and a type for which it is not necessary to use dedicated glasses. Since it is inconvenient for an observer to use dedicated glasses, the type for which it is not necessary to use dedicated glasses (in other words, a type that can form a stereoscopic view for the naked eye) is preferable. As stereoscopic display devices that can form a stereoscopic view for the naked eye, stereoscopic display devices, for example, employing a parallax barrier system or a lenticular system are known. In the stereoscopic display device employing such a system, a plurality of videos (viewpoint videos) in parallax to one another are simultaneously displayed, and a video that is seen differs in accordance with the relative positional relationship (angle) between the display device and the viewpoint of an observer. In a case where a video having a plurality of viewpoints is displayed by the stereoscopic display device, the substantial resolution of the video becomes a resolution that is acquired by dividing the resolution of the display device such as a CRT (Cathode Ray Tube) or a liquid crystal display device by the number of viewpoints. Accordingly, there is a problem in that the image quality deteriorates.

In order to solve such a problem, various considerations have been made. For example, in JP-A-2005-157033, a method for equivalently improving the resolution is proposed in which a time-divisional display is performed by switching between a transmitting state and a shielding state of a parallax barrier in a time-divisional manner in a parallax barrier system.

However, in a case where the parallax barrier extends in the screen vertical direction, although the resolution in the screen horizontal direction can be improved, it is difficult to improve the resolution in the screen vertical direction. Thus, as a technique for enhancing a balance (resolution balance) between the resolution in the screen horizontal direction and the resolution in the screen vertical direction, a step barrier system has been developed. In such a step barrier system, the alignment direction (or extending direction) of openings of the parallax barrier or the axial direction of the lenticular lens is set to the diagonal direction of the screen, and one unit pixel is configured by sub-pixels of a plurality of colors (for example, R (red), G (green), and B (blue)) aligned in one row so as to be adjacent in the diagonal direction.

However, recently, in order to increase the number of pixels or in order to secure the number of pixels that is a predetermined number or more on a smaller screen, the arrangement pitch of the sub-pixels tends to decrease. As above, in a case where the arrangement pitch of the sub-pixels decreases, in order to secure appropriate parallax, it is necessary to decrease a gap between an optical splitter device and a display device of a display unit on the optical axis. However, generally, the display device is disposed on a transparent glass substrate. Accordingly, the gap between the optical splitter device and the display device is naturally determined in accordance with a minimum thickness for which a mechanical strength of the glass substrate is secured. In addition, for an ordinary two-dimensional image, higher precision is demanded, and accordingly, the pixel size tends to further decrease. In a case where a three-dimensional image is displayed by using high-precision pixels, in a step barrier system in units of sub-pixels, there is a concern that it may be necessary to form the glass substrate to be thin up to a level in which it is difficult to secure sufficient mechanical strength. In addition, in a case where the thickness of the glass substrate is set with reference to a three-dimensional display, the pixel size increases, and accordingly, it is difficult to display a high-precision two-dimensional image. Therefore, a stereoscopic display device having a display unit in which the arrangement pitch of the sub-pixels is further decreased without degrading the mechanical strength is desirable.

Thus, it is desirable to provide a display device that can perform a stereoscopic display having multiple viewpoints with higher precision.

Various respective aspects and features of the invention are defined in the appended claims. Combinations of features from the dependent claims may be combined with features of the independent claims as appropriate and not merely as explicitly set out in the claims.

Embodiments of the present invention relate to a stereoscopic display device capable of performing a stereoscopic display employing a parallax barrier system or a lenticular system.

One embodiment of the present disclosure is directed to a display device including: a two-dimensional display unit that displays p (here, p is an integer equal to or greater than two) viewpoint videos, which are spatially divided, within one screen; and an optical device that optically splits the p viewpoint videos displayed on the two-dimensional display unit so as to enable a stereoscopic view at p viewpoints. Here, the two-dimensional display unit includes a plurality of unit pixels each formed from a plurality of sub-pixels that display r types (here, r is an integer that is equal to or greater than three) of colors necessary for a color video display, and the sub-pixels that emit light of different colors are arranged so as to be adjacent to each other in a same row in a screen horizontal direction. Each of the p viewpoint videos is displayed in a plurality of n sub-pixel rows, each of which is configured by the plurality of sub-pixels aligned in a first direction other than the screen horizontal direction and which are consecutive in the screen horizontal direction, in the screen horizontal direction on a cycle of (p x n) rows.

In the display device according to the one embodiment of the present disclosure, p viewpoint videos, which are spatially divided, are optically split such that a stereoscopic view at p viewpoints can be formed by the optical device. Here, each of the viewpoint videos is displayed in a plurality of n sub-pixel rows that are consecutive in the screen horizontal direction at a predetermined gap. Accordingly, without decreasing a gap between the optical device and the two-dimensional display unit, the pitch of the arrangement of the sub-pixels in the two-dimensional display unit is smaller than that of a case where each viewpoint video is displayed in a plurality of only one sub-pixel row at a predetermined gap.

Another embodiment of the present disclosure is directed to a display device including: a display unit that includes a plurality of unit pixels each formed from a plurality of sub-pixels; and an optical device that optically splits a plurality of viewpoint videos displayed on the display unit. The optical device includes a plurality of light transmitting parts that transmit light transmitted from the display unit or light toward the display unit and a plurality of light shielding parts that shield light transmitted from the display unit or light toward the two-dimensional display unit, and, in a screen horizontal direction, a maximum width of the light transmitting part is larger than a width of one sub-pixel and is smaller than a total width of two sub-pixels that are adjacent to each another.

In the display device according to the another embodiment of the present disclosure, a plurality of viewpoint videos displayed on the display unit by the optical device are optically split. Here, in the screen horizontal direction, a maximum width of the light transmitting part of the optical device is larger than a width of one sub-pixel and is smaller than a total width of two sub-pixels that are adjacent to each another. Accordingly, without decreasing a gap between the optical device and the display unit, the pitch of the arrangement of sub-pixels in the display unit is smaller than that of a case where each viewpoint video is displayed in a plurality of only one sub-pixel row at a predetermined gap.

According to the display device of the one embodiment of the present disclosure, p viewpoint videos that are optically split by the optical device respectively include n sub-pixels that are consecutive in the screen horizontal direction. In addition, according to the display device of the another embodiment, in the screen horizontal direction, the maximum width of the light transmitting part is larger than the width of one sub-pixel and is smaller than the total width of two sub-pixels that are adjacent to each other. Accordingly, without decreasing a gap between the optical device (two-dimensional) and the display unit, the pitch of the arrangement of sub-pixels is smaller than that of a case where each viewpoint video is displayed in a plurality of only one sub-pixel row at a predetermined gap. As a result, for example, while a glass substrate or the like that configures the two-dimensional display unit is configured to have a predetermined thickness or more so as to secure the mechanical strength, the pixel density in increased, whereby a two-dimensional image can be displayed at high precision, and a three-dimensional image can be displayed as well.

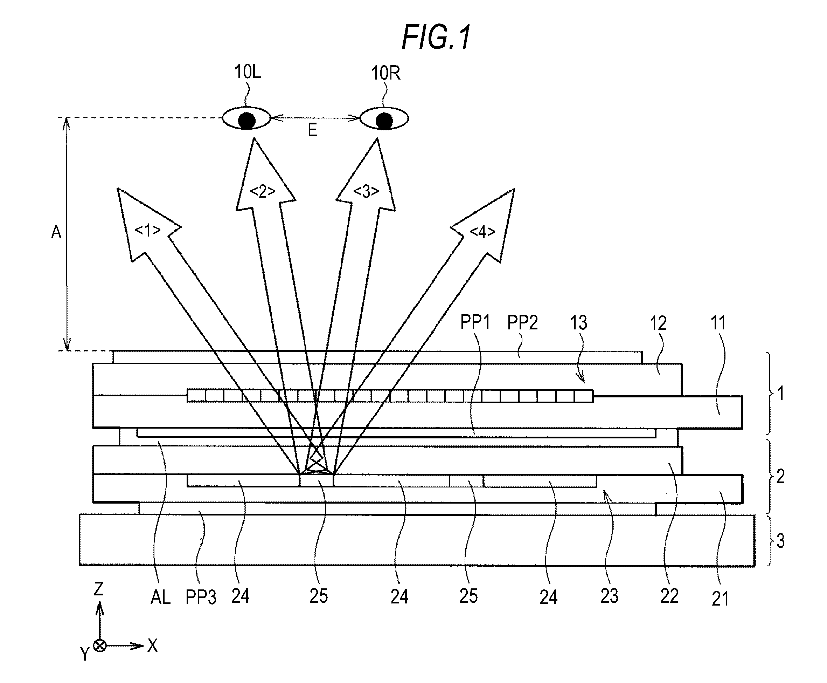

Embodiments of the invention will now be described with reference to the accompanying drawings, throughout which like parts are referred to by like references, and in which: Fig. 1 is a cross-sectional view illustrating the configuration of a stereoscopic display device according to a first embodiment of the present disclosure.
Fig. 2 is a plan view illustrating a sub-pixel arrangement of a liquid crystal display panel of the stereoscopic display device according to the first embodiment.
Fig. 3 is a plan view illustrating an example of a display pattern that is displayed on the liquid crystal display panel illustrated in Fig. 1 and the like.
Figs. 4A to 4D are conceptual diagrams illustrating the original images of four viewpoint videos composed into the display pattern illustrated in Fig. 3.
Figs. 5A and 5B are plan views illustrating examples of a barrier pattern that is formed on a parallax barrier illustrated in Fig. 1 and the like.
Fig. 6 is a diagram schematically illustrating the state of a stereoscopic view.
Fig. 7 is a plan view illustrating a sub-pixel arrangement of a liquid crystal display panel of a stereoscopic display device according to a second embodiment of the present disclosure.
Fig. 8 is a plan view illustrating an example of a display pattern that is displayed on the liquid crystal display panel according to the second embodiment.
Fig. 9 is a plan view illustrating an example of a barrier pattern that is formed on the switching liquid crystal panel according to the second embodiment.
Fig. 10 is a cross-sectional view illustrating the configuration of a stereoscopic display device according to a third embodiment of the present disclosure.
Fig. 11 is a cross-sectional view illustrating a detailed configuration of a liquid crystal lens illustrated in Fig. 10.
Fig. 12 is a plan view illustrating a configuration example of second electrodes of the liquid crystal lens illustrated in Fig. 10.
Fig. 13 is a schematic diagram schematically illustrating the state of the liquid crystal lens shown in Fig. 10 at the time of applying a voltage thereto.

Hereinafter, embodiments of the present disclosure (hereinafter, referred to as embodiments) will be described in detail with reference to the accompanying drawings.

### <First Embodiment>

### [Configuration of Stereoscopic Display Device]

Fig. 1 is a schematic cross-sectional view illustrating the configuration of a stereoscopic display device according to a first embodiment of the present disclosure. This stereoscopic display device, as illustrated in Fig. 1, includes a liquid crystal display panel 1, a parallax barrier 2, and a back light 3 in the order from the observer's side. The liquid crystal display panel 1 and the parallax barrier 2 are fixed by an adhesive layer AL that is, for example, formed from an ultraviolet-curable resin or the like.

The liquid crystal display panel 1 is a transmissive-type liquid crystal display having a plurality of sub-pixels (to be described later) that are two-dimensionally arranged and is acquired by enclosing a liquid crystal layer 13 between one pair of transparent substrates 11 and 12 arranged so as to face each other. On the inner faces of the transparent substrate 11 and 12, a pixel electrode and an opposing electrode (neither are shown in the figure) are disposed so as to have the liquid crystal layer 13 interposed therebetween. In other words, one of the pixel electrode and the opposing electrode is disposed on the inner face of the transparent substrate 11, and the other is disposed on the inner face of the transparent substrate 12. The opposing electrode is disposed so as to be common to all the sub-pixels, and the pixel electrode is disposed to be separated for each sub-pixel. In addition, on the surface of the transparent substrate 11 or the transparent substrate 12, color filters of three colors R (red), G (green), and B (blue) that are necessary for a color display are assigned to and disposed at each sub-pixel. Light emitted from the back light 3 is incident to the liquid crystal display panel 1 through the parallax barrier 2 and then is transmitted through the color filters of three colors, whereby red light, green light, and blue light are output from the liquid crystal display panel 1. In addition, on the outer faces (faces located on a side opposite to the liquid crystal layer 13) of the transparent substrates 11 and 12, polarizing plates PP1 and PP2 may be disposed as are necessary.

The back light 3 includes a light source such as a light emitting diode (LED) and a light guiding plate that is used for performing uniform surface light emission by spreading light emitted from the light source (neither are shown in the figure). In addition, on the emission side of the back light 3, a polarizing plate PP3 may be arranged as is necessary.

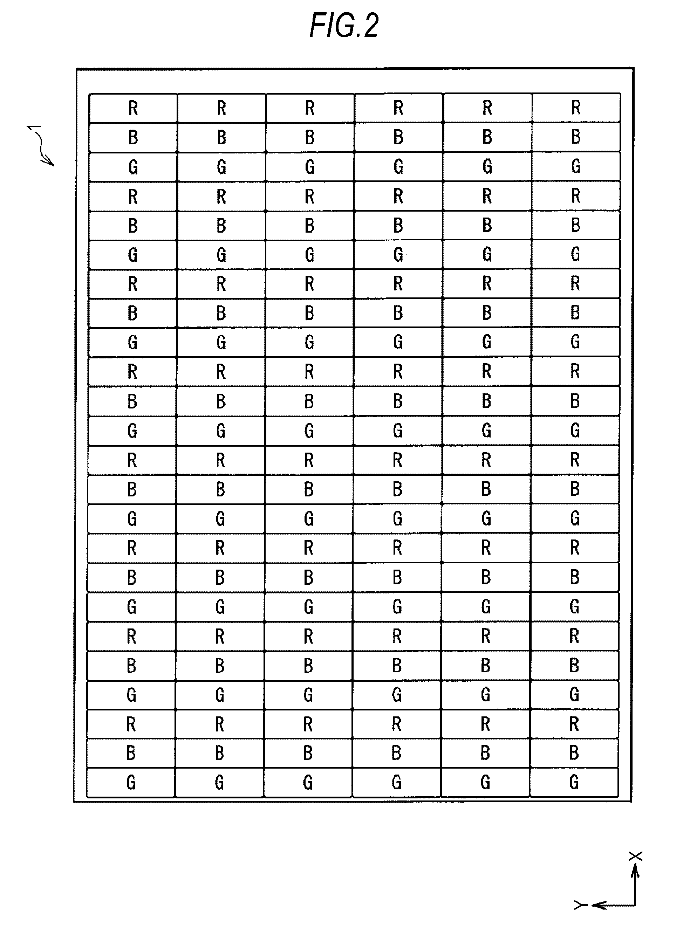

Fig. 2 illustrates a sub-pixel arrangement of the liquid crystal display panel 1. As illustrated in Fig. 2, in the liquid crystal display panel 1, a plurality of sub-pixels R, G, and B are two dimensionally arranged. To be more specific, a pixel arrangement is formed in which sub-pixels of each color appear cyclically in the same row in the screen horizontal direction (X-axis direction), and sub-pixels of the same color are aligned in the same row in the screen vertical direction (Y-axis direction). The liquid crystal display panel 1 modulates the light emitted from the back light 3 for each pixel in such a pixel structure, thereby performing a two-dimensional image display.

In addition, in order to realize a stereoscopic view, different viewpoint videos are necessarily seen by a left eye 10L and a right eye 10R. Accordingly, at least two viewpoint videos including a right-eye video and a left-eye video are necessary. In a case where three or more viewpoint videos are used, a multi-eye view can be realized. In this embodiment, a case will be described in which four viewpoint videos (first to fourth viewpoint videos) denoted by <1> to <4> in Fig. 1 are formed (in other words, the number of viewpoints is four), and observation is performed by using two viewpoint videos among them. Fig. 1 illustrates the appearance in which the third viewpoint video is incident to the right eye 10R as a right-eye video, and the second viewpoint video is incident to the left eye 10L as a left-eye video.

The liquid crystal display panel 1 displays the four viewpoint videos that are spatially divided by composing them within one screen. Each of the four viewpoint videos that are spatially divided is displayed in a plurality of n (here n is an integer equal to or greater than two) sub-pixel rows that are adjacent to each other in the screen horizontal direction on a cycle of (4 x n) rows in the screen horizontal direction. The sub-pixel row is formed from a plurality of sub-pixels R, G, and B aligned in a direction (here, a diagonal direction) other than the screen horizontal direction.

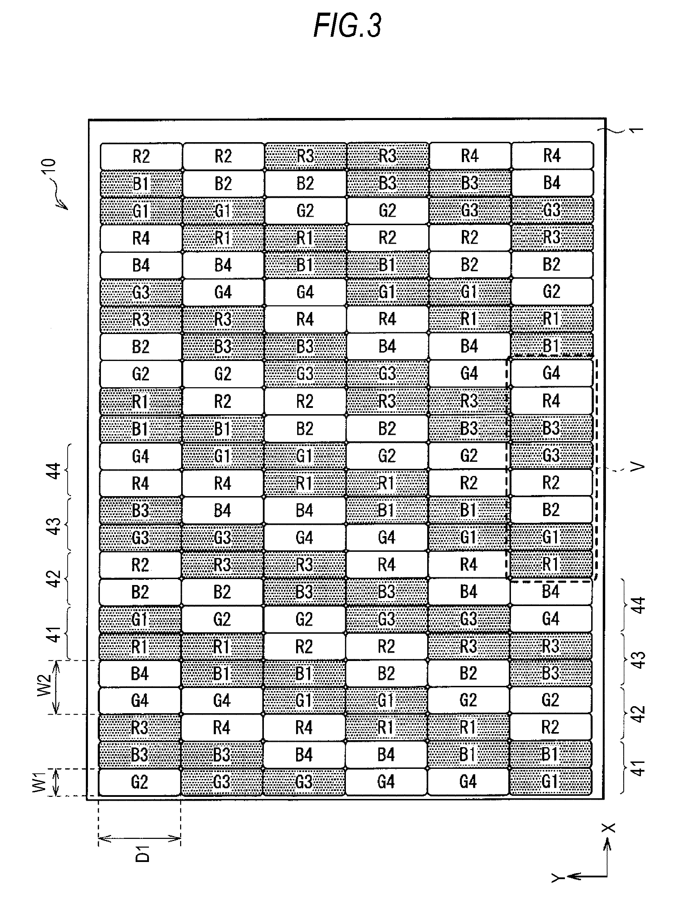

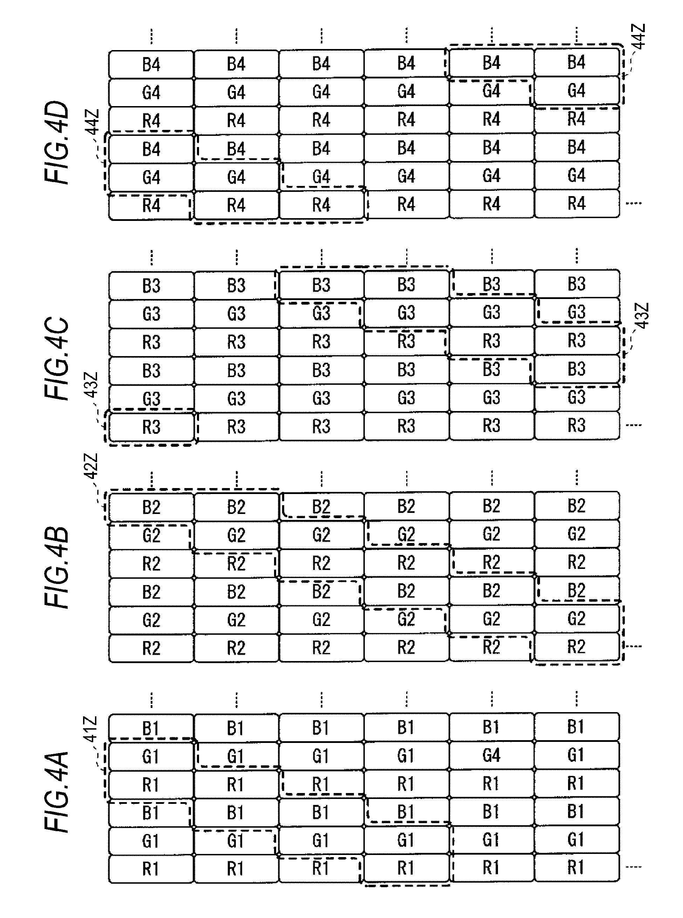

Fig. 3 represents a display pattern 10 (here, n = 2) as an example of four-viewpoint videos that are composed so as to be displayed within one screen. In the display pattern 10, the first to fourth sub-pixel groups 41 to 44 extend in the diagonal direction so as to be parallel to one another and are arranged cyclically in order in the screen horizontal direction. The first sub-pixel group 41 has two consecutive sub-pixel rows that are formed from a plurality of sub-pixels, to which reference signs R1, G1, and B1 are assigned, aligned in the diagonal direction. Similarly, the second sub-pixel group 42 has two consecutive sub-pixel rows that are formed from a plurality of sub-pixels, to which reference signs R2, G2, and B2 are assigned, aligned in the diagonal direction. The third sub-pixel group 43 has two consecutive sub-pixel rows that are formed from a plurality of sub-pixels, to which reference signs R3, G3, and B3 are assigned, aligned in the diagonal direction. The fourth sub-pixel group 44 has two consecutive sub-pixel rows that are formed from a plurality of sub-pixels, to which reference signs R4, G4, and B4 are assigned, aligned in the diagonal direction. The first to fourth sub-pixel groups 41 to 44 display the first to fourth viewpoint videos. Described in more detail, in the first to fourth sub-pixel groups 41 to 44, parts (parts corresponding to each viewpoint position) of a two-dimensional image as the original image that correspond to the first to fourth viewpoint videos are cut out so as to be displayed. In other words, in the first sub-pixel group 41, a partial image 41Z of the two-dimensional image that corresponds to the first viewpoint video illustrated in Fig. 4A is displayed. Similarly, in the second to fourth sub-pixel groups 42 to 44, partial images 42Z, 43Z, and 44Z of the two-dimensional image that correspond to the second to fourth viewpoint videos illustrated in Figs. 4B, 4C, and 4D are displayed. In addition, in Fig. 3, for easy identification and convenience of the description, the sub-pixel rows of the first and third sub-pixel groups 41 and 43 are shaded.

Here, a method of sampling the original image (two-dimensional image) is not particularly limited. In other words, a unit pixel that displays the first to fourth viewpoint videos is configured by three sub-pixels R, G, and B that are arbitrarily selected from the first to fourth sub-pixel groups 41 to 44.

The parallax barrier 2, for example, as illustrated in Fig. 1, is acquired by enclosing the liquid crystal layer 23 between one pair of the transparent substrates 21 and 22 arranged so as to face each other and selectively transmits light in accordance with the oriented state of liquid crystal molecules in the liquid crystal layer 23. In other words, when a stereoscopic display is performed, the parallax barrier 2 is in a state in which a light transmitting part 25 that transmits incident light incident from the back light 3 and a light shielding part 24 that blocks the incident light are arranged at predetermined positions. Accordingly, the parallax barrier 2 forms a barrier pattern that is used for optically splitting the first to fourth viewpoint videos displayed on the liquid crystal display panel 1 so as to enable stereoscopic views at the four viewpoints.

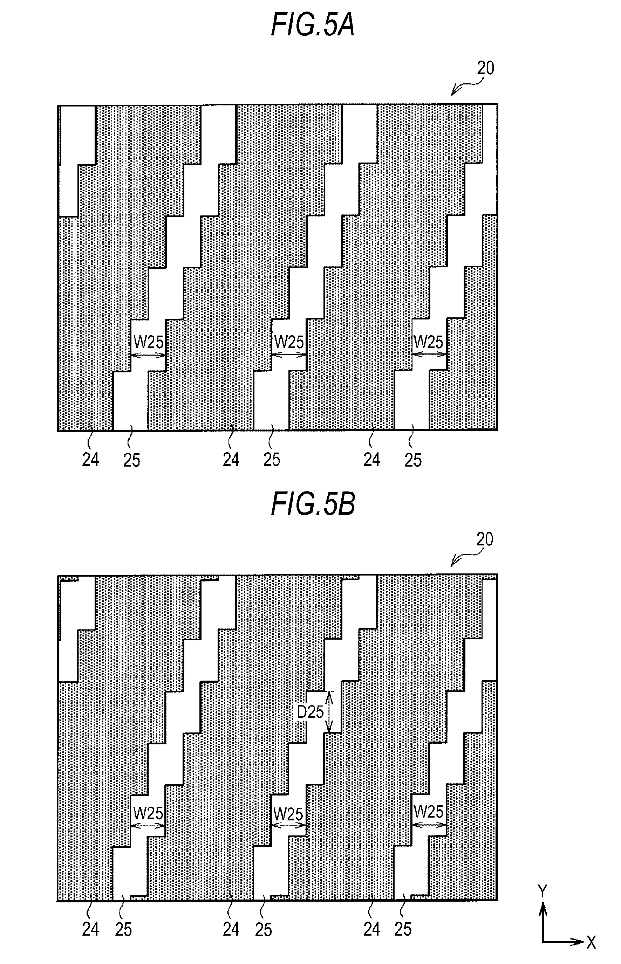

Figs. 5A and 5B illustrates two examples of the barrier pattern 20 that is formed by the liquid crystal layer 23 of the parallax barrier 2. The arrangement position and the shape of the light transmitting part 25 in the barrier pattern 20 are set such that light of each different viewpoint video is separately incident to the left and right eyes 10L and 10R (Fig. 1) of an observer when this stereoscopic display device is viewed at a predetermined position by an observer in a predetermined direction. In addition, in Figs. 5A and 5B, although the light transmitting part 25 is formed in a step shape extending in the diagonal direction in correspondence to the first to fourth sub-pixel groups 41 to 44 illustrated in Fig. 3, it may have a stripe shape extending in the diagonal direction. Here, in the screen horizontal direction, it is preferable that the maximum width W25 of the light transmitting part 25 is larger than the width W1 (Fig. 3) of one sub-pixel R, G, or B and is smaller than a total width W2 (Fig. 3) of two sub-pixels R, G, and B that are adjacent to each other (W1 < W25 < W2). The reason for this is that an unnecessary viewpoint video is prevented from being incident to the left eye 10L and the right eye 10R of an observer even in a case where there is some difference between a predetermined viewpoint position at which a desired viewpoint video can be visually recognized and the positions of the left eye 10L and the right eye 10R of an observer. Particularly, as illustrated in Fig. 5B, in a case where the maximum length D25 of the light transmitting part 25 in the screen vertical direction is smaller than the length D1 (Fig. 3) of one sub-pixel R, G, or B (D25 < D1), a deviation between the predetermined viewpoint position and the positions of both eyes of the observer in the screen vertical direction can be handled, which is more preferable.

In the parallax barrier 2, on the inner faces of the transparent substrates 21 and 22, a pattern electrode and an opposing electrode (neither are shown in the figure) are disposed so as to have the liquid crystal layer 23 interposed therebetween. In other words, one of the pixel electrode and the opposing electrode is disposed on the inner face of the transparent substrate 21, and the other is disposed on the inner face of the transparent substrate 22. The opposing electrode is disposed so as to cover the liquid crystal layer 23 at least in the effective screen area. Meanwhile the pattern electrode is divided into a plurality of parts and is arranged cyclically at the ratio of one to (4 x n) sub-pixel rows in the screen horizontal direction. The pattern electrode has the same step shape as the light transmitting part 25.

In the parallax barrier 2 having such a configuration, for example, when a voltage is applied between the step-shaped pattern electrode and the opposing electrode, a plurality of step-shaped light transmitting parts 25 corresponding to the shape of the plurality of pattern electrodes are formed at a predetermined gap. In other words, for example, in a case where the liquid crystal molecules of the liquid crystal layer 23 are formed from a twisted nematic liquid crystals in which white is displayed in a state of applying no voltage (so called normally white) , the liquid crystal molecules are vertically oriented in a pattern electrode forming area, whereby the area becomes the light shielding part 24. The liquid crystal mode is not particularly limited, and for example, an electric-field effect birefringence mode may be employed. Alternatively, a normally-black vertical alignment (VA) mode in which black is displayed in the state of applying no voltage or an in-plane switching mode (IPS) mode may be applied as long as white can be displayed as a two-dimensional image by appropriately changing the electrode configuration or the like. As above, the parallax barrier 2 performs the function of optically splitting the four viewpoint videos for enabling a stereoscopic view at four viewpoints. As a result, the observer can visually recognize the video displayed on the liquid crystal panel 1 as a three-dimensional image.

On the other hand, in a state in which a voltage is not applied between the pattern electrode and the opposing electrode, the entire face of the liquid crystal layer 23 is in a transmissive state. In such a case, the parallax barrier 2 does not perform the function of optically splitting four viewpoint videos. Accordingly, in the state in which a voltage is not applied between the pattern electrode and the opposing electrode, an observer visually recognizes a video displayed on the liquid crystal display panel 1 not as a three-dimensional video but a two-dimensional video.

### [Operation of Stereoscopic Display Device]

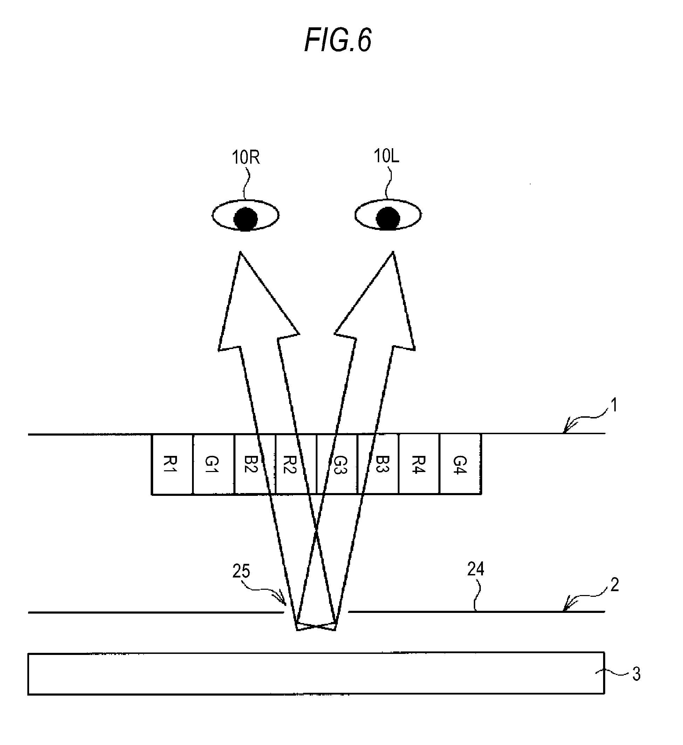

According to this stereoscopic display device, in the liquid crystal display panel 1, all the viewpoint videos are displayed within one screen in a spatially divided manner. More specifically, for example, as the display pattern 10 illustrated in Fig. 3, the first to fourth viewpoint videos are assigned to the first to fourth sub-pixel groups 41 to 44 so as to be displayed. Such a display is observed through the barrier pattern 20 (Figs. 5A and 5B) formed by the parallax barrier 2. In the parallax barrier 2, light incident from the back light 3 is selectively transmitted, whereby the four viewpoint videos displayed on the liquid crystal display panel 1 are optically split from one another so as to enable a stereoscopic view at four viewpoints. In other words, as illustrated in Fig. 6, only light emitted from sub-pixels R3, G3, and B3 that form the third viewpoint video is recognized in the right eye 10R of the observer. On the other hand, in the left eye 10L of the observer, only light emitted from the sub-pixels R2, G2, and B2 that form the second viewpoint video is recognized. Accordingly, a stereoscopic image that is based on the second viewpoint video and the third viewpoint video is perceived by the observer. Fig. 6 is a conceptual diagram that illustrates the configuration of the cross-section that is perpendicular to the screen (XY plane) in an area V surrounded by dotted lines in Fig. 3. In addition, in Fig. 6, an example is illustrated in which a stereoscopic image is perceived by observing the second viewpoint video using the right eye 10R and observing the third viewpoint video using the left eye 10L. However, by arbitrarily combining two out of the first to fourth viewpoint videos, a stereoscopic image can be observed.

### [Advantages of First Embodiment]

As above, according to this embodiment, the first to fourth viewpoint videos that are optically split by the parallax barrier 2 are formed by displaying the first to fourth viewpoint videos in a plurality of the first to fourth sub-pixel groups 41 to 44 that are formed from two pixel rows consecutive in the screen horizontal direction at a predetermined gap. Accordingly, compared to a case where each viewpoint video is formed by displaying the viewpoint video in a plurality of only one sub-pixel row at a predetermined gap, the arrangement pitch of the sub-pixels R, G, and B can be decreased without decreasing the gap between the liquid crystal layer 23 of the parallax barrier 2 and the liquid crystal layer 13 of the liquid crystal display panel 1 in the thickness direction (Z-axis direction). As a result, by increasing the pixel density while securing the mechanical strength of the transparent substrate 11 of the liquid crystal display panel 1 and the transparent substrate 22 of the parallax barrier 2 that are formed to have a predetermined thickness or more, a two-dimensional image can be displayed with high precision, and a three-dimensional image can be displayed as well. In a case where the gap E between the light beam of the second viewpoint video and the light beam of the third viewpoint video that are adjacent to each other set to 65 mm in Fig. 1, an appropriate viewing distance A is about 300 mm.

### <Second Embodiment>

Next, a stereoscopic display device according to a second embodiment of the present disclosure will be described. The same reference numeral is assigned to a configuration that is substantially the same as that of the stereoscopic display device according to the above-described first embodiment, and the description thereof will be appropriately omitted.

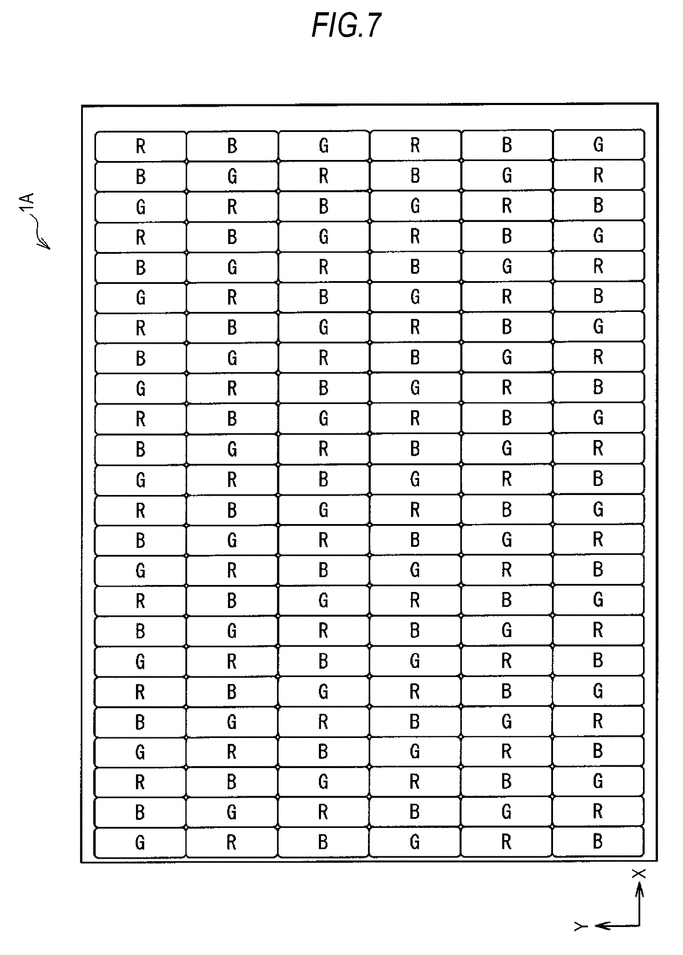

In the above-described first embodiment, in the liquid crystal display panel 1, pixels are arranged such that sub-pixels of different colors appear cyclically in the same row in the screen horizontal direction, and sub-pixels of the same color are aligned in the same row in the screen vertical direction. In contrast to this, in this embodiment, as illustrated in Fig. 7, a liquid crystal display panel 1A is used in which pixels are arranged such that sub-pixels of different colors appear cyclically in the same row in the screen horizontal direction and in the same row in the screen vertical direction, and sub-pixels of the same color are aligned in the same row in the screen diagonal direction. Fig. 7 illustrates an example of a sub-pixel arrangement of the liquid crystal display panel 1A of the stereoscopic display device according to this embodiment.

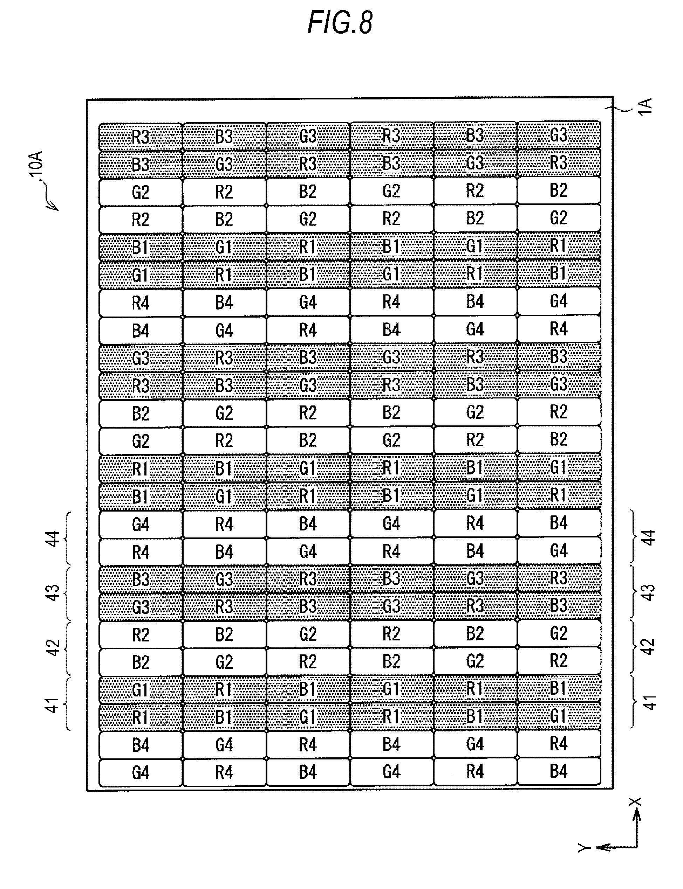

Fig. 8 illustrates a display pattern 10A (here, n = 2) as an example of four viewpoint videos that is displayed by composing the viewpoint videos within one screen in the liquid crystal display panel 1A. In the display pattern 10A, the first to fourth sub-pixel groups 41 to 44 extend in the screen vertical direction and are arranged cyclically in order in the screen horizontal direction. The first sub-pixel group 41 has two consecutive sub-pixel rows that are formed from a plurality of sub-pixels R1, G1, and B1 aligned in the screen vertical direction. Similarly, the second sub-pixel group 42 has two consecutive sub-pixel rows that are formed from a plurality of sub-pixels R2, G2, and B2 aligned in the screen vertical direction. The third sub-pixel group 43 has two consecutive sub-pixel rows that are formed from a plurality of sub-pixels R3, G3, and B3 aligned in the screen vertical direction. The fourth sub-pixel group 44 has two consecutive sub-pixel rows that are formed from a plurality of sub-pixels R4, G4, and B4 aligned in the screen vertical direction. The first to fourth sub-pixel groups 41 to 44 display the first to fourth viewpoint videos. As a result, stripe-shaped first to fourth viewpoint videos that extend in the screen vertical direction are arranged cyclically in the screen horizontal direction. In addition, in Fig. 8, for easy identification and convenience of the description, the sub-pixel rows of the first and third sub-pixel groups 41 and 43 are shaded.

### [Operation of Stereoscopic Display Device]

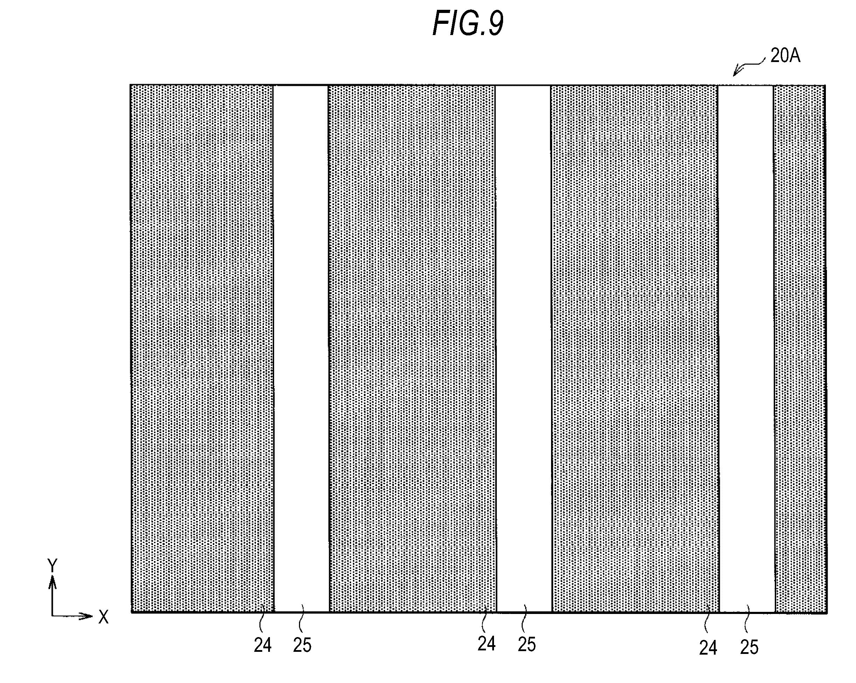

According to the stereoscopic display device of this embodiment, similarly to the above-described first embodiment, a stereoscopic view can be formed. In other words, in the liquid crystal display panel 1A, all the viewpoint videos are displayed within one screen in a spatially divided manner. More specifically, for example, as the display pattern 10A illustrated in Fig. 8, the first to fourth viewpoint videos are assigned to the first to fourth sub-pixel groups 41 to 44 so as to be displayed. Such a display is observed through the barrier pattern 20A (Fig. 9) formed by the parallax barrier 2. In the parallax barrier 2, light incident from the back light 3 is selectively transmitted, whereby the four viewpoint videos displayed on the liquid crystal display panel 1A are optically split from one another so as to enable a stereoscopic view at four viewpoints.

### [Advantages of Second Embodiment]

As described above, according to this embodiment, advantages similar to those of the above-described first embodiment can be acquired. In other words, the first to fourth viewpoint videos are formed by displaying the first to fourth viewpoint videos in a plurality of the first to fourth sub-pixel groups 41 to 44 that are formed from two pixel rows that are consecutive in the screen horizontal direction at a predetermined gap. Accordingly, by increasing the pixel density while securing a sufficient distance between the liquid crystal display panel 1A and the parallax barrier 2 and maintaining the mechanical strength thereof, a two-dimensional image can be displayed with high precision, and a three-dimensional image can be displayed as well.

### <Third Embodiment>

Next, a stereoscopic display device according to a third embodiment of the present disclosure will be described.

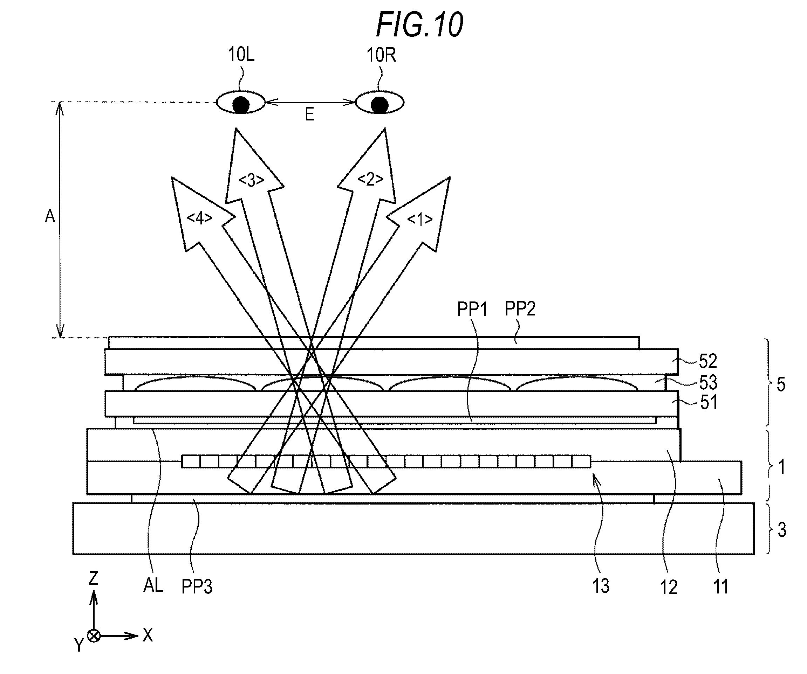

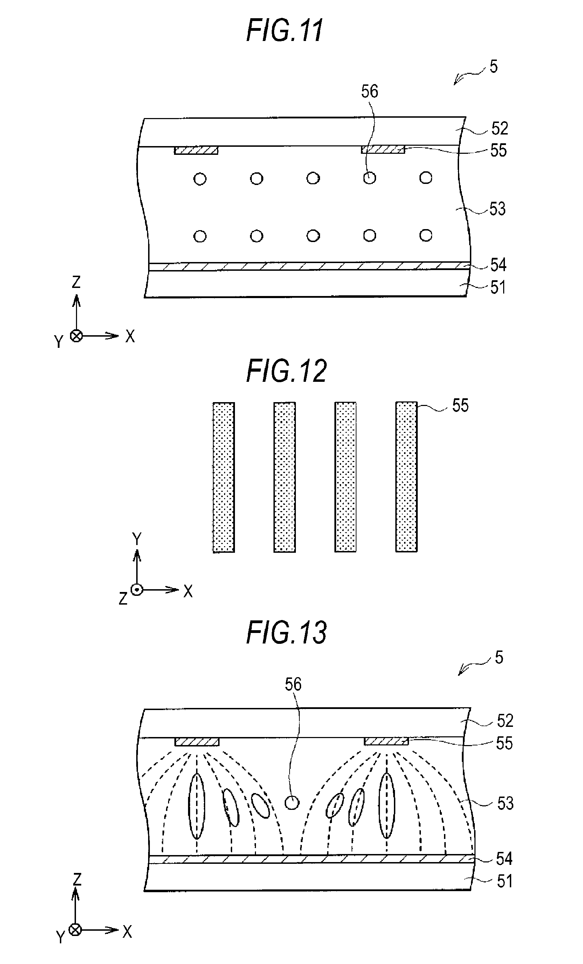

In the above-described first and second embodiments, the parallax barrier 2 that includes a plurality of the light transmitting parts 25 and a plurality of the light shielding parts 24 as optical elements is used. In contrast to this, in the stereoscopic display device of this embodiment illustrated in Fig. 10, a liquid crystal lens 5 as illustrated in Fig. 11 is used instead of the parallax barrier 2. This liquid crystal lens 5 is arranged to the observer side from the liquid crystal panel 1. In addition, the stereoscopic display device according to this embodiment is substantially the same as the stereoscopic display device according to the above-described first embodiment except for the above-described point. Thus, hereinafter, the liquid crystal lens 5 will be described, and the description of the others will be appropriately omitted.

The liquid crystal lens 5 includes a transparent substrate 51 and a transparent substrate 52 that are arranged so as to face each other with a gap interposed therebetween and a liquid crystal layer 53 that is arranged between the transparent substrate 51 and the transparent substrate 52. The transparent substrates 51 and 52, for example, are formed from glass materials or resin materials. On the inner face (a face facing the transparent substrate 52) of the transparent substrate 51, a first electrode 54 formed from a transparent conductive film such as an ITO film is formed on the approximately entire face. Although not illustrated in the figure, on the transparent substrate 51, a first orientation film is formed so as to be in contact with the liquid crystal layer 53 through the first electrode 54. On the inner face (a face facing the transparent substrate 51) of the transparent substrate 52, a second electrode 55 formed from a transparent conductive film such as an ITO film is partially formed. On the transparent substrate 52, a second orientation film (not shown in the figure) is formed so as to be in contact with the liquid crystal layer 53 through the second electrode 55. The liquid crystal layer 53 includes liquid crystal molecules 56, and by changing the arrangement direction of the liquid crystal molecules 56 in accordance with a voltage applied by the first electrode 54 and the second electrode 55, a lens effect is controlled. The liquid crystal molecules 56 have dielectric anisotropy and refractive index anisotropy and, for example, has an index ellipsoid that has different refractive indices for a light beam transmitted in the longitudinal direction and a light beam transmitted in the short side direction.

The second electrode 55, as illustrated in Fig. 12, is formed from a plurality of line electrodes that are arranged with a gap interposed therebetween. The first electrode 55 has a predetermined electrode width and extends in the vertical direction (Y-axis direction), and a plurality of the first electrodes 55 are arranged in parallel in the X axis direction at a predetermined gap. By employing such a configuration, the liquid crystal lens 5 can generate a lens effect that has refracting power only in one direction (X-axis direction).

The liquid crystal layer 53 is electrically switched between a state in which there is no lens effect (Fig. 11) and a state in which the lens effect is generated (Fig. 13) in accordance with the state of voltages applied to the first electrode 54 and the second electrode 55. A rubbing process is performed for the first and second orientation films, which are not shown in the figure, for example, in the Y-axis direction. In a state in which any voltage is not applied (Fig. 11), the liquid crystal molecules 56 are almost uniformly oriented in a direction parallel to a predetermined orientation direction that is defined by the rubbing process. On the other hand, when a voltage is applied between the first electrode 54 and the second electrode 55, the liquid crystal molecules 56 are oriented as illustrated in Fig. 12. In other words, on the XY plane, the liquid crystal molecules 56 are oriented so as to allow its longer side to face the Z-axis direction, as they are closer to an area interposed between the first electrode 54 and the second electrode 55. As illustrated in Fig. 13, the orientation direction of the liquid crystal molecules 56 has a distribution according to a position on the XY plane, whereby the liquid crystal layer 53 generates the lens effect.

In this stereoscopic display device, a plurality of viewpoint videos formed by light transmitted from the back light 3 through the liquid crystal display panel 1 are optically split by the liquid crystal lens 5, whereby a stereoscopic view can be formed. For example, as illustrated in Fig. 10, light transmitted from the back light 3 through the liquid crystal display panel 1 is incident to the right eye 10R or the left eye 10L of the observer through the liquid crystal lens 5. At that time, pixel information corresponding to each viewpoint position is incident to the right eye 10R or the left eye 10L of the observer. For example, in a case where the display pattern 10A, illustrated in Fig. 8, according to the second embodiment is displayed on the liquid crystal display panel 1, light transmitted from the second sub-pixel row 42 is recognized by the right eye 10R, and light transmitted from the third sub-pixel row 43 is recognized by the left eye 10L. Accordingly, a stereoscopic image that is based on the second viewpoint video and the third viewpoint video is conceived by the observer.

### [Advantages of Third Embodiment]

As above, even in a case where the liquid crystal lens is used as an optical device that optically splits p viewpoint videos for enabling a stereoscopic view at p viewpoints, each viewpoint video is formed by a plurality of sub-pixel rows that are consecutive in the screen horizontal direction, whereby advantages similar to those of the first and second embodiments can be acquired.

As above, the embodiments of the present disclosure have been described. However, the present disclosure is not limited to the above-described embodiments, and various changes can be made therein. For example, in the above-described embodiments, a case has been described in which the unit pixel of the two-dimensional display unit is configured by sub-pixels of three colors R (red), G (green), and B (blue). However, in the present disclosure, the unit pixel may be configured by sub-pixels of four or more colors (a combination of R (red), G (green), B (blue), and W (white) or Y (yellow)).

In addition, in the above-described embodiments, four viewpoint videos that are spatially split in the two-dimensional display unit are displayed together within one screen, and each viewpoint video is formed by displaying the viewpoint video in a plurality of four sub-pixel groups each formed from two sub-pixel rows that are consecutive in the screen horizontal direction. However, in the present disclosure, the number of viewpoint videos and the number of sub-pixel rows configuring the sub-pixel group of each viewpoint video are not limited thereto and may be set to integers that are equal to or greater than two. In other words, the two-dimensional display unit according to the embodiment of the present disclosure may display p (here, p is an integer equal to or greater than two) viewpoint videos that are spatially divided within one screen. Here, each of the p viewpoint videos is configured by a plurality of sub-pixels aligned in a first direction other than the screen horizontal direction and is displayed in a plurality of n sub-pixel rows, which are consecutive in the screen horizontal direction, in the screen horizontal direction on a cycle of (p x n) row. In addition, the optical device according to the embodiment of the present disclosure may optically split p viewpoint videos displayed on the two-dimensional display unit such that a stereoscopic view can be formed at p viewpoints. Furthermore, it is preferable that, in the screen horizontal direction, the maximum width of the light transmitting part is larger than the width of one sub-pixel and is smaller than a sum of the widths of n sub-pixels that are adjacent to each other. In addition, it is preferable that the light transmitting part has a step shape or a stripe shape extending in the diagonal direction in correspondence with n consecutive sub-pixel rows.

In addition, in the above-described embodiments, the two-dimensional display unit, the parallax barrier, and the back light are sequentially arranged from the observer side. However, the present disclosure is not limited thereto, and, in the present disclosure, the parallax barrier, the two-dimensional display unit, and the back light may be sequentially arranged from the observer side.

Furthermore, in the above-described embodiments, a color liquid crystal display using the back light as the two-dimensional display unit has been described as an example. However, the present disclosure is not limited thereto. For example, a display using an organic EL device or a plasma display may be used.

In addition, in the above-described embodiments, although the parallax barrier or the liquid crystal lens is used as the optical device, the present disclosure is not limited thereto. For example, even in a case where a lenticular lens in which a plurality of cylindrical lenses are aligned in a direction of one dimension is used as the optical device, similar advantages can be acquired.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present disclosure contains subject matter related to that disclosed in Japanese Priority Patent Application JP 2010-257042 filed in the Japan Patent Office on November 17, 2010, the entire content of which is hereby incorporated by reference.

It should be understood by those skilled in the art that various modifications, combinations, sub-combinations and alterations may occur depending on design requirements and other factors insofar as they are within the scope of the appended claims.

## Claims

1. A display device comprising:
a two-dimensional display unit that displays p (here, p is an integer equal to or greater than two) viewpoint videos, which are spatially divided, within one screen; and
an optical device that optically splits the p viewpoint videos displayed on the two-dimensional display unit so as to enable a stereoscopic view at p viewpoints,
wherein the two-dimensional display unit includes a plurality of unit pixels each formed from a plurality of sub-pixels that display r types (here, r is an integer that is equal to or greater than three) of colors necessary for a color video display, and the sub-pixels that emit light of different colors are arranged so as to be adjacent to each other in a same row in a screen horizontal direction, and
wherein each of the p viewpoint videos is displayed in a plurality of n sub-pixel rows, each of which is configured by the plurality of sub-pixels aligned in a first direction other than the screen horizontal direction and which are consecutive in the screen horizontal direction, in the screen horizontal direction on a cycle of (p x n) rows.

2. The display device according to Claim 1, wherein the optical device is a parallax barrier that includes a plurality of light transmitting parts that transmit light transmitted from the two-dimensional display unit or light toward the two-dimensional display unit and a plurality of light shielding parts that shield light transmitted from the two-dimensional display unit or light toward the two-dimensional display unit.

3. The display device according to Claim 2, wherein, in the screen horizontal direction, a maximum width of the light transmitting part is larger than a width of one sub-pixel and is smaller than a total width of the n sub-pixels that are adjacent to one another.

4. The display device according to Claim 3, wherein the light transmitting part has a step shape or a stripe shape extending in a diagonal direction in correspondence with the n sub-pixel rows that are consecutive.

5. The display device according to Claim 4, wherein, in a screen vertical direction, a maximum length of the light transmitting part is smaller than a length of the one sub-pixel.

6. The display device according to Claim 1, wherein one unit pixel is configured by r types of the sub-pixels selected from consecutive two or more and (r-1) or less rows that extend in the screen horizontal direction.

7. The display device according to Claim 6, wherein the unit pixel is formed from the sub-pixels of three colors R (red), G (green), and B (blue), the sub-pixels of two colors out of the sub-pixels of the three colors are located in a same row in the screen horizontal direction, and the sub-pixels of remaining one color is located in a row adjacent to the row in which the sub-pixels of the two colors are located.

8. The display device according to Claim 1, wherein, in the two-dimensional display unit, the sub-pixels of a same color are arranged in a same row in a second direction other than both the screen horizontal direction and the first direction.

9. The display device according to Claim 1, wherein the optical device is a liquid crystal lens.

10. A display device comprising:
a display unit that includes a plurality of unit pixels each formed from a plurality of sub-pixels; and
an optical device that optically splits a plurality of viewpoint videos displayed on the display unit,
wherein the optical device includes a plurality of light transmitting parts that transmit light transmitted from the display unit or light toward the display unit and a plurality of light shielding parts that shield light transmitted from the display unit or light toward the display unit, and
wherein, in a screen horizontal direction, a maximum width of the light transmitting part is larger than a width of one sub-pixel and is smaller than a total width of two sub-pixels that are adjacent to each another.

11. The display device according to Claim 10,
wherein the light transmitting part has a step shape, and
wherein, in a screen vertical direction, a maximum length of the light transmitting part is smaller than a length of one sub-pixel.

12. A display device comprising:
a display unit that displays a plurality of viewpoint videos; and
an optical device that optically splits the plurality of viewpoint videos displayed on the display unit,
wherein, in the display unit, sub-pixels that emit light of different colors in a same row in a screen horizontal direction are arranged so as to be adjacent to each other, and
wherein each of the plurality of viewpoint videos is configured by two sub-pixels that are consecutive in the screen horizontal direction.

13. The display device according to Claim 12, wherein, in the screen horizontal direction, a maximum width of the light transmitting part is larger than a width of the sub-pixel and is smaller than a total width of the two sub-pixels that are adjacent to each other.

14. The display device according to Claim 12, wherein the light transmitting part has a step shape, and, in a screen vertical direction, a maximum length of the light transmitting part is smaller than a length of the sub-pixel.
